Europäisches Patentamt

European Patent Office

Office européen des brevets

(11) Veröffentlichungsnummer: **0 009 773**

**A1**

(12) # EUROPÄISCHE PATENTANMELDUNG

(21) Anmeldenummer: 79103670.0

(22) Anmeldetag: 27.09.79

(51) Int. Cl.³: **H 04 M 1/65**
H 04 M 9/08, H 04 Q 1/46

(30) Priorität: 30.09.78 DE 2842757

(43) Veröffentlichungstag der Anmeldung:
16.04.80 Patentblatt 80/8

(84) Benannte Vertragsstaaten:
AT BE CH FR GB IT LU NL SE

(71) Anmelder: Deutsche Fernsprecher Gesellschaft mbH
Marburg
Frauenbergstrasse 35
D-3550 Marburg(DE)

(72) Erfinder: Schmidt, Klaus Dieter
Marburger Landstrasse 1
D-3553 Cölbe(DE)

(74) Vertreter: Eisenführ & Speiser
Eduard-Grunow-Strasse 27
D-2800 Bremen 1(DE)

(54) **Verfahren und Schaltung zur Unterscheidung von elektrischen Sprachsignalen oder dgl. und frequenzkonstanten Tonsignalen.**

(57) Eine elektrische Schaltung zur Unterscheidung von elektrischen Sprachsignalen und freuquenz-konstanten elektrischen Tonsignalen enthält eine Phasenvergleichsschaltung (2), die an einem ersten Eingang (a) das Eingangssignal empfängt und an einem Ausgang (c) ein Phasendifferenzsignal abgibt, das kontinuierlich die Phasendifferenz zwischen dem Eingangssignal und einem Vergleichssignal enthält, welches über einen Rückkopplungszweig (4, 6) vom Ausgang (c) dem zweiten Eingang (b) der Phasenvergleichsschaltung (2) mit einer Frequenz zugeführt wird, die der Augenblicksfrequenz des Eingangssignals mit einer vorgegebenen Änderungsrate nachgeführt wird. Der Phasenvergleichsschaltung (2) ist ein Ausgangskreis (14) nachgeschaltet, der bei konstanter Phasendifferenz innerhalb eines vorgegebenen Zeitintervalls das Vorhandenseins des Tonsignals, und bei veränderlicher Phasendifferenz innerhalb des vorgegebenen Zeitintervalls das Vorhandenseins des Sprachsignals anzeigt. Die Erfindung betrifft ferner ein Verfahren, nach dem die Schaltung arbeitet.

Fig. 1

Beschreibung
=========================

Die Erfindung betrifft ein Verfahren und eine Schaltung zur Unterscheidung von elektrischen Sprachsignalen oder dergleichen und frequenzkonstanten Tonsignalen, die abwechselnd als Eingangssignal auftreten.

Ein derartiges Verfahren bzw. derartige Schaltung werden z.B. verwendet, um in Fernsprechnetzen, an irgendeiner Stelle einer gewählten Fernsprechverbindung, z.B. bei der Teilnehmerstation des Anrufenden, in einfacher Weise feststellen zu können, ob Ruftöne, z.B. Besetzt- oder Frei-Zeichen empfangen werden, oder ob sich der angerufene Teilnehmer meldet.

Bei einem ersten bekannten Verfahren der eingangs genannten Art wird die Unterscheidung zwischen elektrischen Sprachsignalen und Tonsignalen in einfacher Weise dadurch getroffen, daß den Tonsignalen ein erstes Frequenzband zugeordnet ist, in dem das Tonsignal liegt, und daß dem Sprachsignal ein zweites, verschiedenes Frequenzband zugeordnet ist. Die schaltungstechnische Verwirklichung dieses Verfahrens erfolgt z.B. mittels einer Bandsperre, die den Durchgang eines im ersten Frequenzband liegenden Tonsignals sperrt, außerhalb des ersten Frequenzbandes liegende Signale jedoch durch die Schaltung laufen läßt. Nachteilig ist hierbei, daß eine derartige Schaltung nur auf ein Tonsignal einer bestimmten vorgegebenen Frequenz abgestimmt ist, so daß die Verwendung einer derartigen Schaltung z.B. in Fernsprechnetzen mit unterschiedlichen Ruftonfrequenzen ohne vorherige Verstimmung der Bandsperre nicht möglich ist. Darüber hinaus liegt die Frequenz der Ruftöne der Fernsprechnetze in der Mitte des Sprachfrequenzbandes, und zwar im Bereich zwischen 200 und 900 Hz. Innerhalb des Rufton-Frequenzbandes auftretende Sprachsignale werden daher fehlerhaft als Rufton klassifiziert.

Bei einem weiteren bekannten Verfahren wird als Kriterium für die Unterscheidung von elektrischen Sprachsignalen und Tonsignalen der Grad der Amplitudenmodulation des empfangenen Eingangssignals verwendet, d.h. bei einem vorgegebenen Grad an Amplitudenmodulation wird ein Sprachsignal, bei einem Signal mit konstanter Amplitude ein Tonsignal angezeigt. Da Sprachsignale jedoch auch mit im wesentlichen konstanter Amplitude auftreten können, und umgekehrt, Ruftöne, z.B. durch Einschwingvorgänge etc. eine Amplitudenmodulation aufweisen können, ergeben sich bei der Unterscheidung von Sprachsignalen und Tonsignalen unvermeidliche Fehler.

Aufgabe der Erfindung ist es demgegenüber, ein Verfahren und eine Schaltungsanordnung der eingangs genannten Art anzugeben, das bzw. die elektrische Sprachsignale und frequenzkonstante Tonsignale zuverlässig unterscheidet, wobei die Schaltung unabhängig von der jeweiligen Frequenz des bzw. der Tonsignale einsetzbar sein soll und einen einfachen Aufbau besitzen und kostengünstig herstellbar sein soll.

Diese Aufgabe wird erfindungsgemäß durch ein Verfahren der eingangs genannten Art gelöst, das dadurch gekennzeichnet ist, daß die Frequenz eines Vergleichssignals der Augenblicksfrequenz des Eingangssignals mit einer vorgegebenen Änderungsrate nachgeführt wird, und daß ein die Phasendifferenz zwischen Eingangssignal und Vergleichssignal
kontinuierlich kennzeichnendes Phasendifferenzsignal erzeugt
wird, und daß bei konstanter Phasendifferenz innerhalb
eines vorgegebenen Zeitenintervalls das Vorhandensein
des Tonsignals,bei veränderlicher Phasendifferenz innerhalb des vorgegebenen Zeitintervalls das Vorhandensein
des Sprachsignals angezeigt wird.

Die Aufgabe wird ferner durch eine elektrische Schaltung
gelöst, bei der abwechselnd elektrische Sprachsignale und
frequenzkonstante Tonsignale als Eingangssignal zugeführt
werden. Diese Schaltung ist erfindungsgemäß gekennzeichnet
durch eine Phasenvergleichsschaltung, die an einem ersten
Eingang das Eingangssignal empfängt und an einem Ausgang
ein Phasendifferenzsignal abgibt, das kontinierlich die
Phasendifferenz zwischen dem Eingangssignal und einem
Vergleichssignal enthält, welches über einen Rückkopplungszweig vom Ausgang dem zweiten Eingang der Phasenvergleichsschaltung mit einer Frequenz zuführbar ist, die der Augenblicksfrequenz des Eingangssignals mit einer vorgegebenen
Änderungsrate nachführbar ist, und einen der Phasenvergleichschaltung nachgeschalteten Ausgangskreis, der bei konstanter Phasendifferenz innerhalb eines vorgegebenen Zeitintervalls das Vorhandensein des Tonsignals, bei veränderlicher Phasendifferenz innerhalb des vorgegebenen Zeitintervalls das Vorhandensein des Sprachsignals anzeigt.

Die Vorteile der Erfindung liegen insbesondere darin, daß
als Kriterium für die Unterscheidung zwischen elektrischen
Sprachsignalen und frequenzkonstanten Tonsignalen der
Frequenzmodulationsgrad dieser beiden Signale dient, der
eine zuverlässige und fehlerfreie Unterscheidung der beiden
abwechselnd auftretenden Signale ermöglicht.

Tritt ein Sprachsignal auf, das stets eine gewisse Frequenzmodulation besitzt, so muß die Frequenz des Vergleichssignals der Augenblicksfrequenz des Sprachsignals innerhalb eines vorgegebenen Beobachtungszeitraums mehrfach nachgeführt werden, die Phasendifferenz zwischen Eingangssignal und Vergleichssignal schwankt zeitlich. Tritt dagegen ein Tonsignal mit im wesentlichen konstanter Frequenz auf, so erfolgt eine einmalige Nachführung der Frequenz des Vergleichssignals auf die Frequenz des Tonsignals. Anschließend ist die Phasendifferenz zwischen diesen beiden Signalen zeitlich konstant und es wird das Vorhandensein eines Tonsignals angezeigt. Das Verfahren bzw. die Schaltung ist somit unabhängig von Pegelschwankungen des Eigangssignals.

Ein weiterer wesentlicher Vorteil der Erfindung besteht darin, daß die absolute Frequenzlage des Tonsignals auf die Wirkung der erfindungsgemäßen Schaltung ohne Einfluß ist, d.h. die erfindungsgemäße Schaltung kann ohne jeglichen schaltungstechnischen Eingriff frequenzkonstante Tonsignale mit z.B. 450 Hz oder 600 Hz oder 800Hz von elektrischen Sprachsignalen mit derselben Zuverlässigkeit unterscheiden. Die erfindungsgemäße Schaltung ist somit ohne Änderungen in Fernsprechnetzen der verschiedenen nationalen Postverwaltungen einsetzbar, deren frequenzkonstante Ruftöne unterschiedliche Frequenzen besitzen.

Vorteilhafterweise folgt bei dem erfindungsgemäßen Verfahren die Nachführung der Frequenz des Vergleichssignals automatisch in Abhängigkeit von der zeitlichen Änderung der Phasendifferenz zwischen Eingangssignal und Vergleichssignal.

Bevorzugt wird das Vergleichssignal als Rechtecksignal
erzeugt und das Eingangssignal wird in einem ersten
Verfahrensschritt in ein Rechtecksignal umgewandelt.
Das Phasendifferenzsignal läßt sich dann als Folge
rechteckförmiger Einzelimpulse erzeugen, deren Breite
ein Maß für die momentane Phasendifferenz zwischen Vergleichssignal und Eingangssignal ist. Bevorzugt wird das
Phasendifferenzsignal dann in ein digitales Signal umgewandelt, welches bei konstanter Phasendifferenz den Wert
"1" und bei einer Änderung der Phasendifferenz den Wert
"0" annimmt. Der Wert "0" tritt also immer nur dann auf,
wenn aufgrund einer Änderung der Augenblicksfrequenz des
Eingangssignals eine Nachführung der Frequenz des Vergleichssignals erforderlich wird. Die Nachführung der
Frequenz des Vergleichssignals kann erfindungsgemäß mit
einer relativ großen Änderungsrate, d.h. sehr schnell erfolgen. Das erfindungsgemäße Verfahren besitzt dann alle
Vorteile der digitalen Signalverarbeitung.

In der erfindungsgemäßen Schaltung enthält der Rückkopplungskreis an seinem Eingang bevorzugt einen Regelsignal-
Erzeugungskreis, dem ein spannungsgesteuerter Oszillator
der z.B. einen Frequenzbereich von 100 Hz bis 20 KHz besitzt, nachgeschaltet ist, dessen Ausgang mit dem zweiten
Eingang der Phasenvergleichsschaltung verbunden ist.

Bevorzugt ist der Phasenvergleichsschaltung eine Signalformerschaltung vorgeschaltet, die das Eingangssignal
in ein Rechtecksignal umwandelt. Der spannungsgesteuerte
Oszillator gibt bevorzugt ebenfalls eine Rechteckschwingung
ab, und die Phasenvergleichsschaltung enthält Schaltungsbausteine, die das Phasendifferenzsignal als eine Folge
rechteckförmiger Einzelimpulse abgeben, deren Breite ein
Maß für die momentane Phasendifferenz zwischen den an den
Eingängen der Phasenvergleichsschaltung anliegenden Signalen
ist. Als Schaltungsbausteine der Phasenvergleichsschaltung
läßt sich z.B. ein geeignet beschaltetes Flip-Flop verwenden. Der Regelsignal-Erzeugungskreis enthält bevorzugt eine Tiefpaß, der das Phasendifferenzsignal in ein Regelsignal zur Ansteuerung des spannungsgesteuerten Oszillators umwandelt. Die vorgegebene Änderungsrate, mit der die Frequenz des Vergleichssignals der Augenblicksfrequenz des Eingangssignals nachläuft, läßt sich z.B. durch Dimensionierung dieses Tiefpasses festlegen.

Zwischen dem Ausgang der Phasenvergleichschaltung und dem Eingangsanschluß des Ausgangskreises liegt bevorzugt eine Logikschaltung, der das Phasendifferenzsignal zugeführt wird. Bei einer zeitlich konstanten Phasendifferenz zwischen dem Eingangssignal und dem Vergleichssignal, d.h. bei einer konstanten Breite des Einzelimpulse des Phasendifferenzsignals, gibt die Logikschaltung ein digitales Signal mit einem ersten Zustand an den Ausgangskreis ab und sperrt darüber hinaus bevorzugt den Eingang des Regelsignal-Erzeugungskreises mittels einer geeigneten Torschaltung. Bei einer Änderung der Phasendifferenz, d.h., wenn also die Nachführung der Frequenz des Vergleichssignals erforderlich wird, gibt die Logikschaltung den zweiten Zustand des digitalen Signals an den Ausgangskreis ab, öffnet die Torschaltung des Regelsignal-Erzeugungskreises und läßt das Phasendifferenzsignal in diesen Kreis eintreten.

Der Ausgangskreis der erfindungsgemäßen Schaltung enthält bevorzugt eine Parallelschaltung aus einem Integrierglied und einem Differenzierglied in Kombination mit geeigneten Torschaltungen. Empfängt der Ausgangskreis über ein vorgegebenes Zeitintervall von der Logikschaltung ausschließlich das digitale Signal mit dem ersten Zustand, z.B. mit dem Wert "1", so gibt das Integrierglied ein Signal ab, welches das Vorhandensein des Tonsignals anzeigt. Empfängt der Ausgangskreis dagegen innerhalb des vorgegebenen Zeitintervalls beide Zustände des digitalen Signals, z.B. also neben dem Wert "1" auch den Wert "0", so gibt das Differenzierglied ein Signal ab, welches das Vorhandensein eines Sprachsignals anzeigt. Liegt kein Eingangssignal an der erfindungsgemäßen Schaltung, so geben Integrierglied und/oder Differenzierglied ein diesen Zustand kennzeichnendes drittes Signal ab.

Der Signalformerschaltung läßt sich ein Verstärker vorschalten, falls das Eingangssignal mit zu kleinem oder
schwankendem Pegel empfangen wird.

Besonders bevorzugt wird die Phasenvergleichsschaltung
der Rückkopplungszweig und die Logikschaltung als ein
phasenstarr gekoppelter Rückkopplungskreis (phase locked loop),
PLL, verwirklicht, dessen Kenndaten derart gewählt sind,
daß bei Anliegen eines konstantfrequenzen Tonsignals eine
phasenstarre Rückkopplung erfolgt, der PLL also "fängt"
oder "koppelt". Bei Anliegen eines frequenzmodulierten
Sprachsignals besteht dagegen innerhalb eines vorgegebenen
Zeitintervalls stets die Notwendigkeit, die Frequenz des
Vergleichssignals der sich ändernden Augenblicksfrequenz
des Eingangssignals nachzuführen.

Im folgenden werden Ausführungsbeispiele der Erfindung
anhand der Zeichnung näher erläutert. Es zeigen:

Fig. 1  ein Blockschaltbild einer ersten Ausführungsform der erfindungsgemäßen Schaltung;

Fig. 2  ein Blockschaltbild einer zweiten Ausführungsform der erfindungsgemäßen Stellung; und

Fig. 3  ein Blockschaltbild einer weiteren Ausführungsform der Schaltung zum Unterdrücken der fre-
        quenzkonstanten Tonsignale in einer Ver-
        stärkerschaltung.

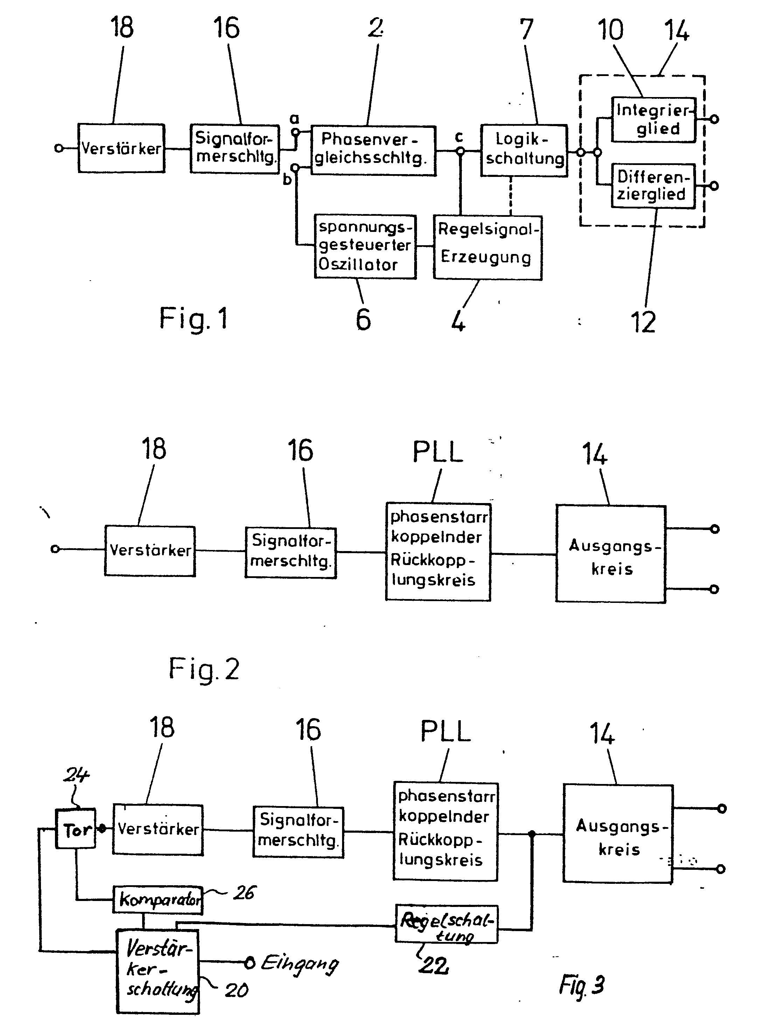

Das in Fig. 1 dargestellte Blockschaltbild einer ersten Ausführungsform der erfindungsgemäßen Schaltung zeigt am Eingang der Schaltung einen Verstärker 18, dem ein Signalformer 16 nachgeschaltet ist, der das verstärkte Eingangssignal in ein Rechtecksignal umwandelt und an den ersten Eingang a einer Phasenvergleichschaltung 2 abgibt. Dem zweiten Eingang b der Phasenvergleichsschaltung 2 wird von einem spannungsgesteuerten Oszillator 6 ein Vergleichssignal zugeführt, dessen Frequenz der Augenblicksfrequenz des am Eingang a anliegenden Eingangssignals mit einer vorgegebenen Änderungsrate nachführbar ist, die um ein Vielfaches größer als eine vorgegebene untere Modulationsfrequenz des Sprachsignals ist und z.B. 40 Hz beträgt. Zu diesem Zweck liegt vor dem Eingang des spannungsgesteuerten Oszillators 6 eine Regelsignal-Erzeugungsschaltung 4, deren Eingang mit dem Ausgang c der Phasenvergleichsschaltung 2 verbunden ist. Die Regelsignal-Erzeugungsschaltung 4 und der spannungsgesteuerte Oszillator 6 stellen einen Rückkopplungszweig für die Phasenvergleichsschaltung 2 dar. Zusammen mit der Phasenvergleichsschaltung 2 stellt der Rückkopplungszweig 4,6 einen phasenstarr koppelnden Rückkopplungskreis PLL dar, der versucht, eine phasenstarre Kopplung zwischen Eingangssignal und Vergleichssignal herbeizuführen.

Der spannungsgesteuerte Oszillator 6 ist als Rechteckoszillator ausgebildet. Die Phasenvergleichsschaltung 2 enthält zum Beispiel ein über Dioden ansteuerbares Flip-Flop, das bei jeder positiven Flanke des Eingangssignals und bei jeder positiven Flanke des Vergleichssignals schaltet und dadurch am Ausgang c eine Folge von Rechteckimpulsen abgibt, deren Breite ein Maß für die momentane Phasendifferenz zwischen Eingangssignal und Vergleichssignal ist. Die Regelsignal-Erzeugungsschaltung 4 enthält einen Tiefpaß, dessen Grenzfrequenz die maximale Änderungsrate bestimmt, mit der die Frequenz des Vergleichssignals nachführbar, d.h. eine phasenstarre Kopplung herbeiführbar ist.

Am Ausgang c der Phasenvergleichsschaltung 2 liegt vor dem Ausgangskreis 14 eine Logikschaltung 7, der das Phasendifferenzsignal zugeführt wird. Die Logikschaltung 7 erzeugt ein digitales Signal mit dem Wert "1", solange die Einzelimpulse des Phasendifferenzsignals eine konstante Breite aufweisen, d.h. eine konstante Phasendifferenz zwischen Eingangssignal und Vergleichssignal vorliegt. Bei einer sich zeitlich ändernden Phasendifferenz, d.h. bei einer Änderung der Impulsbreite des Phasendifferenzsignals, liefert die Logikschaltung 7 ein digitales Signal mit dem Wert "0".

Das digitale Ausgangssignal der Logikschaltung 7 wird dem Ausgangskreis 14 zugeführt, der eine Parallelschaltung aus einem Integrierglied 10 und einem Differenzierglied 12 enthält. Empfängt der Ausgangskreis 14 während eines vorgegebenen Zeitintervalls nur das digitale Signal "1", so spricht das Integrierglied 10 nach dem Beobachtungszeitintervall an und gibt ein Ausgangssignal ab, welches das Vorhandensein eines Tonsignals anzeigt. Wird dagegen während des Beobachtungszeitintervalls von der Logikschaltung 7 neben dem Wert "1" auch der Wert "0" empfangen, so spricht das Differenzierglied 12 an und gibt ein Ausgangssignal ab, welches das Vorhandensein eines Sprachsignals anzeigt. Das Integrierglied 10 sowie das Differenzierglied 12 können zu diesem Zweck mit einer Torschaltung verbunden sein, die die Ausgangssignale des Integrierglieds bzw. Differenzierglieds zu geeigneten Zeitpunkten passieren lassen.

Das digitale Ausgangssignal oder einer entsprechendes
Signal der Logikschaltung 7 wird ferner über eine gestrichelt dargestellte Steuerleitung einer Torschaltung
am Eingang des Regelsignal-Erzeugungskreises 4 zugeführt.
Solange diese Torschaltung von der Logikschaltung 7 ein
Signal mit dem Wert "1" erhält, solange also die Einzelimpulse des Phasendifferenzsignals eine konstante Breite
aufweisen, wird diese Torschaltung gesperrt, sodaß der
Rückkopplungszweig elektrisch abgekoppelt ist. Erhält diese
Torschaltung dagegen von der Logikschaltung 7 ein Signal
mit dem Wert "0", so wird diese Torschaltung geöffnet
und der Rückkopplungszweig 4,6 erhält dann das Phasendifferenzsignal vom Ausgang c der Phasenvergleichsschaltung,
um eine Nachführung der Frequenz des Vergleichssignals
durchzuführen.

Fig. 2 zeigt eine Ausführungsform der erfindungsgemäßen
Schaltung, bei der die Phasenvergleichsschaltung 2 sowie
der Rückkopplungszweig 4, 6 und die Logikschaltung 7 der
Fig. 1 integral als ein phasenstarr koppelnder Rückkopplungskreis PLL dargestellt ist, dessen Kenndaten sowie dessen Beschaltung derart gewählt sind, daß beim Anliegen eines Tonsignals eine phasenstarre Rückkopplung
über den Rückkopplungszweig innerhalb des gesamten Beobachtungszeitintervalls erfolgt, während bei Vorhandensein
eines unvermeidlich frequenzmodulierten Sprachsignals eine
phasenstarre Rückkopplung innerhalb des gesamten Beobachtungszeitintervalls nicht gelingt. Das Ausgangssignal des
phasenstarr koppelnden Rückkopplungskreises PLL, vor
dessen Ausgang eine der Logikschaltung 7 entsprechende
Schaltung liegt, wird dem Ausgangskreis 14 zugeführt, der einen Aufbau gemäß Fig. 1 aufweisen kann. Vor dem Rückkopplungskreis PLL liegt eine Serienschaltung aus Verstärker 18 und Signalformerschaltung 16, die das Eingangssignal verstärkt und anschließend in ein Rechtecksignal
umform.

Als phasenstarr koppelnder Rückkopplungskreis PLL wird
bevorzugt ein Kreis vierter Ordnung verwendet, der sich
bei Vorhandensein einer konstanten Phasendifferenz
zwischen Eingangssignal und Vergleichssignal auf den
Phasendifferenzwert 0 einregelt.

Fig. 3 zeigt ein Blockschaltbild einer weiteren Ausführungsform der Schaltungsanordnung, die in diesem
Beispiel zum Unterdrücken frequenzkonstanter Tonsignale in einer Verstärkerschaltung eingesetzt wird.
Bei der Verstärkerschaltung 20 handelt es sich z.B. um
den Lauthörverstärker eines Fernsprechapparats mit
einer Lauthöreinrichtung, bei der der Fernsprechteilnehmer über ein Mikrofon den Fernsprechtext einsprechen kann. Die erfindungsgemäße Schaltungsanordnung 2-18, vergl. Fig. 1,bzw. 14 -18 PLL, empfängt
ihr Eingangssignal von einem geeigneten Anschluß
der Verstärkerschaltung 20. Mit dem Ausgang der Logikschaltung 7, bzw. mit dem Ausgang des phasenstarr
koppelnden Rückkopplungskreises PLL, ist eine Regelschaltung 22 verbunden, deren Ausgang mit einem den
Verstärkungsfaktor festlegenden Eingang der Verstärkerschaltung 20 verbunden ist. Empfängt der Eingang der Regelschaltung 22 ein Signal, welches das
'orhandensein eines frequenzkonstanten Tonsignals
nzeigt, so erzeugt die Regelschaltung 22 an ihrem
usgang ein Signal, welches den Verstärkungsfaktor
er Verstärkerschaltung 20 heruntersetzt und damit frequenzkonstante Tonsignale innerhalb der Verstärkerschaltung 20 entsprechend dämpft.

Vor der Signalformerschaltung 16 bzw. dem Verstärker 18 des PLL ist eine Torschaltung eingefügt. Diese Torschaltung wird von einem Komperator 26 in den Durchlaßzustand geschaltet, wenn das dem Komperator von der Verstärkerschaltung 20 zugeführte Signal einen vorgegebenen Schwellwert überschreitet. Durch diese Maßnahme ist sichergestellt, daß die Unterdrückung der frequenzkonstanten Tonsignale nur dann einsetzt, wenn diese einen vorgegebenen Schwellwert innerhalb der Verstärkerschaltung 20 überschreiten. Frequenzkonstante Tonsignale, deren Amplitude unterhalb dieses Schwellwerts liegt, werden nicht gedämpft. Dieser Schaltungsaufbau eignet sich dazu, zu verhindern, daß die Verstärkerschaltung 20 während des Vorhandenseins von Tonsignalen durch unerwünschte Mitkopplungen sich aufschaukelt und dann als Oszillatorschaltung wirkt und das erzeugte Signal über die Lauthöreinrichtung als Pfeifton abgibt.

Deutsche Fernsprecher Gesellschaft mbH., Marburg
Frauenbergstraße 35, 3550 Marburg/Lahn

------------------------------------------------

Verfahren und Schaltung zur Unterscheidung von elektrischen Sprachsignalen oder dgl. und frequenzkonstanten Tonsignalen

------------------------------------------------

A n s p r ü c h e

==================

1. Verfahren zur Unterscheidung von elektrischen Sprachsignalen oder dgl. und frequenzkonstanten Tonsignalen, die abwechselnd als Eingangssignal auftreten, dadurch gekennzeichnet, daß die Frequenz eines Vergleichssignals der Augenblicksfrequenz des Eingangssignals mit einer vorgegebenen Änderungsrate nachgeführt wird, und daß ein die Phasendifferenz zwischen Eingangssignal und Vergleichssignal kontinuierlich kennzeichnendes Phasendifferenzsignal erzeugt wird, und daß bei konstanter Phasendifferenz innerhalb eines vorgegebenen Zeit intervalls das Vorhandensein des Tonsignals, bei veränderlicher Phasendifferenz innerhalb des vorgegebenen Zeitintervalls das Vorhandensein des Sprachsignals angezeigt wird.

0009773

2. Verfahren nach Anspruch 1, dadurch gekennzeichnet, daß die Änderungsrate, mit der die Frequenz des Vergleichssignals nachgeführt wird, ein Vielfaches einer vorgegebenen unteren Modulationsfrequenz des Sprachsignals ist.

3. Verfahren nach Anspruch 2, dadurch gekennzeichnet, daß die Änderungsrate über 10 Hz liegt.

4. Verfahren nach Anspruch 1, 2 oder 3, dadurch gekennzeichnet, daß die Nachführung der Frequenz des Vergleichssignals automatisch in Abhängigkeit von der zeitlichen Änderung der Phasendifferenz zwischen Eingangssignal und Vergleichssignal geregelt wird.

5. Verfahren nach Anspruch 4, dadurch gekennzeichnet, daß das Vergleichssignal als Rechtecksignal abgegeben wird, daß das Eingangssignal in ein Rechtecksignal umgewandelt wird, und daß das Phasendifferenzsignal als Folge rechteckförmiger Einzelimpulse erzeugt wird, deren Breite ein Maß für die momentane Phasendifferenz zwischen Vergleichssignal und Eingangssignal ist.

6. Elektrische Schaltungsanordnung zur Durchführung des Verfahrens nach einem der Ansprüche 1-5, der abwechselnd elektrische Sprachsignale und frequenzkonstante Tonsignale als Eingangssignal zugeführt werden, gekennzeichnet durch eine Phasenvergleichsschaltung (2), die an einem ersten Eingang (a) das Eingangssignal empfängt und an einem Ausgang (c) ein Phasendifferenzsignal abgibt, das kontinuierlich die Phasendifferenz zwischen dem Eingangssignal und einem Vergleichssignal enthält, welches über einen Rückkopplungszweig (4,6) vom Ausgang (c) dem zweiten Eingang (b) der Phasenvergleichsschaltung (2) mit einer Frequenz zuführbar ist, die der Augenblicksfrequenz des Eingangssignals mit einer vorgegebenen Änderungsrate nachführbar ist, und einen der Phasenvergleichsschaltung (2) nachgeschalteten Ausgangskreis (14), der bei konstanter Phasendifferenz innerhalb eines vorgegebenen Zeitintervalls das Vorhandensein des Tonsignals, bei veränderlicher Phasendifferenz innerhalb des vorgegebenen Zeitintervalls das Vorhandensein des Sprachsignals anzeigt.

7. Elektrische Schaltung nach Anspruch 6, dadurch gekennzeichnet, daß der Rückkopplungszweig (4,6) an seinem Eingang einen Regelsignal-Erzeugungskreis (4) enthält, dem ein spannungsgesteuerter Oszillator (6) nachgeschaltet ist, dessen Ausgang mit dem zweiten Eingang (b) der Phasenvergleichsschaltung (2) verbunden ist.

8. Elektrische Schaltung nach Anspruch 7, dadurch gekennzeichnet, daß der spannungsgesteuerte Oszillator (6) einen Frequenzbereich von 100 Hz bis 20 KHz besitzt.

9. Elektrische Schaltung nach einem der Ansprüche 6 bis 8, dadurch gekennzeichnet, daß zwischen dem Ausgang (c) der Phasenvergleichsschaltung (2) und dem Eingangsanschluß des Ausgangskreises (14) eine Logikschaltung (7) angeordnet ist, die bei zeitlich konstanter Phasendifferenz zwischen Eingangssignal und Vergleichssignal ein digitales Signal mit dem Wert "1", bei veränderlicher Phasendifferenz den Wert "0" abgibt.

10. Elektrische Schaltung nach Anspruch 9, dadurch gekennzeichnet, daß der Ausgangskreis (14) eine Parallelschaltung aus Integrierglied (10) und Differenzierglied (12) enthält, und daß bei zeitlich konstanter Phasendifferenz das Integrierglied (10), bei zeitlich veränderlicher Phasendifferenz das Differenzierglied (12) ein Signal abgibt.

- 4 -

0009773

11. Elektrische Schaltung nach einem der Ansprüche 6 bis 10, dadurch gekennzeichnet, daß der Phasenvergleichsschaltung (2) eine Signalformerschaltung (16) vorgeschaltet ist, die das Eingangssignal in ein Rechtecksignal umwandelt, daß der spannungsgesteuerte Oszillator (6) als Rechteckoszillator ausgebildet ist, und daß die Phasenvergleichsschaltung (2) Schaltungsmittel enthält, die das Phasendifferenzsignal als Folge rechteckförmiger Einzelimpulse abgeben, deren Breite ein Maß für die momentane Phasendifferenz zwischen den an den Eingängen (a, b) anliegenden Signalen ist.

12. Elektrische Schaltung nach einem der Ansprüche 7 bis 11, dadurch gekennzeichnet, daß der Regelsignal-Erzeugungskreis (4) einen Tiefpaß enthält.

13. Elektrische Schaltung nach einem der Ansprüche 9 bis 12, dadurch gekennzeichnet, daß der Regelsignal-Erzeugungskreis (4) eine von der Logikschaltung (7) ansteuerbare Torschaltung enthält, die bei zeitlich konstanter Phasendifferenz zwischen Eingangssignal und Vergleichssignal den Eingang (c) des Regelsignal-Erzeugungskreises (4) sperrt.

14. Elektrische Schaltung nach einem der Ansprüche 6 bis 13, dadurch gekennzeichnet, daß der Signalformerschaltung (16) ein Verstärker (18) vorgeschaltet ist.

15. Elektrische Schaltung nach einem der Ansprüche 6 bis 14, dadurch gekennzeichnet, daß die Phasenvergleichsschaltung (2), der Rückkopplungszweig (4, 6) und die Logikschaltung (7) integral als ein phasenstarr koppelnder Rückkopplungskreis (PPL, 8) aufgebaut sind, dessen Fangbereich von etwa 100 Hz bis 20 KHz reicht.

16. Elektrische Schaltungsanordnung nach einem der Ansprüche 6 bis 15 zur selektiven Unterdrückung frequenzkonstanter Tonsignale in einer Verstärkerschaltung, dadurch gekennzeichnet, daß die Schaltungsanordnung (2-18) an die Verstärkerschaltung (20) angekoppelt ist, und daß eine Regelschaltung (22) mit dem Ausgang der Schaltungsanordnung (2-18) verbunden ist und bei Vorhandensein eines Tonsignals am Ausgang der Schaltungsanordnung (2-18) den Verstärkungsfaktor der Verstärkerschaltung (20) herabsetzt.

17. Elektrische Schaltungsanordnung nach Anspruch 16, dadurch gekennzeichnet, daß der Eingang der Regelschaltung (22) mit dem Ausgang der Logikschaltung (7) verbunden ist.

18. Elektrische Schaltungsanordnung nach Anspruch 16 oder 17, dadurch gekennzeichnet, daß die Schaltungsanordnung (2-18) über eine Torschaltung angekoppelt ist, die nur dann in den Durchlaßzustand geht, wenn die das von der Verstärkerschaltung (20) einem Komperator (26) zugeführte Signal einen vorgegebenen Schwellwert überschreitet.

0009773

Fig. 1

Fig. 2

Fig. 3

0009773

**Europäisches Patentamt**

# EUROPÄISCHER RECHERCHENBERICHT

Nummer der Anmeldung

EP 79 10 3670

| Kategorie | EINSCHLÄGIGE DOKUMENTE | | KLASSIFIKATION DER ANMELDUNG (Int.Cl. 3) |
|---|---|---|---|
| | Kennzeichnung des Dokuments mit Angabe, soweit erforderlich, der maßgeblichen Teile | betrifft Anspruch | H 04 M 1/65 |
| | DE - A - 2 100 522 (COMPUR-WERK) <br><br> * Seite 1, Zeilen 1-5; Seite 2, Zeile 16 - Seite 3, Zeile 16; Figur * <br><br> -- | 1,5 | H 04 M 1/65 <br> 9/08 <br> H 04 Q 1/46 |
| | US - A - 4 099 125 (BENNETT) <br><br> * Spalte 2, Zeilen 10-33 * <br><br> -- | 1,4,6, 7,12, 15 | |
| | ELECTRICAL DESIGN NEWS, Band 17, Nr. 19, 1. Oktober 1972, Seiten 26-33 <br> Denver, U.S.A. <br> A.B. GREBENE: "The Monolithic Phase Locked Loop: A Versatile Building Block" <br><br> * Seite 26, rechte Spalte, Zeile 7 - Seite 27, linke Spalte, Zeile 3; Seite 28, l...e Spalte, Zeilen 18-24; S...e 32, linke Spalte, Zeilen 17-25 * <br><br> -- | 15 | **RECHERCHIERTE SACHGEBIETE (Int. Cl. 3)** <br><br> H C4 M 1/65 <br> H 04 Q 1/46 <br> H 04 M 3/24 <br> 9/08 <br> H 04 Q 1/446 <br> H 03 D 3/24 <br> G 01 R 23/12 <br> H 04 B 3/20 |
| | DE - C - 931 290 (ELECTROACUSTIC) <br><br> * Seite 1, Zeilen 14-22; Seite 2, Zeilen 46-67; Seite 2, Zeile 101 - Seite 3, Zeile 19 * <br><br> ---- | 1,16 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-12-1979 | VANDEVENNE |

EPA form 1503.1 06.78